(19) Europäisches Patentamt
European Patent Office
Office européen des brevets

(11) Publication number: 0 069 719
A1

(12) # EUROPEAN PATENT APPLICATION

(21) Application number: 82850149.4

(22) Date of filing: 29.06.82

(51) Int. Cl.³: C 01 F 7/74
C 02 F 1/52

(30) Priority: 03.07.81 SE 8104149

(43) Date of publication of application: 12.01.83 Bulletin 83/2

(84) Designated Contracting States: AT BE CH DE FR GB IT LI LU NL SE

(71) Applicant: Boliden Aktiebolag
Box 5508
S-114 85 Stockholm(SE)

(72) Inventor: Gunnarsson, Knut Lennart
Birkagata 135
S-252 60 Helsingborg(SE)

(72) Inventor: Nilsson, Rolf Olof
Ransviksvägen 14
S-260 42 Mölle(SE)

(74) Representative: Inger, Lars Ulf Bosson et al,
Boliden AB Box 5508
S-114 85 Stockholm(SE)

(54) **A method for producing basic aluminium sulphate.**

(57) The present invention relates to a method for preparing a basic aluminium sulphate of the general formula

$$A\ (OH_x)\ (SO_4)_y\ (H_2O)_{z\ n}$$

where
n is an integer
x is 0.75 - 1.5;
y is 0.7 - 1.07;
x+2y is 3; and
z is 1.5-4; whereat z is 4 when the product is in solid form, and z is 4 when the product is in the form of an aqueous solution. The compound produces positively charged complexes having charge-neutralizing properties in systems containing suspended or colloidal, negatively charged particles. When carrying out the method an aluminium sulphate is reacted with a compound from the group CaO, $Ca(OH)_2$, BaO, $Ba(OH)_2$, SrO and $Sr(OH)_2$ to form the above compound. The sulphate formed is then separated.

EP 0 069 719 A1

CVA 0713

82-05-10

A METHOD FOR PRODUCING BASIC ALUMINIUM SULPHATE

DESCRIPTION

Technical Field

The present invention relates to a method for producing a polynucleate basic aluminium sulphate which, in aqueous solution, provides positively charged polynucleate complexes having charge-neutralising properties in systems containing suspended or colloidal, negatively charged particles.

The object of the present invention is to provide an effective and efficient method for producing industrially polynucleate basic aluminium sulphate.

Background Art

A number of aluminium products are known which contain polynucleate aluminium ions in solution. These products have been developed as a result of the demand for more effective chemicals for water-purifying, paper-sizing and plant-dewatering processes, for example. Because of the high charge of the metal ions, the properties exhibited by the polynucleate products are far superior when used within the aforementioned technical fields than the previously used simple compounds. The aluminium products developed with the aim of improving efficiency in the aforementioned fields of use are principally of two different kinds, namely chloride-based basic Al-compounds and sulphate-based Al-compounds. Of the first mentioned group there was first developed a polyaluminium chloride (PAC) of the general formula

$$AlCl_x\ (OH)_{3-x}\quad n$$

where $x$ is $\leq 3$ normally 1-2.

These compounds and their manufacture are described in, for example, SE,B, 7201333-7, SE,B, 7405237-4, SE,B, 7412965-1, SE,B, 7503641-8 and DE,A, 2630768.

The second type of aluminium-chloride solutions, PALC, which are also based on a content of the same polynucleate complexes have general summation formuli which can be written as

$$\left[AlCl_3 \cdot x\ AOH\right]_n$$

where A is alkali metal, and

$$\left[AlCl_3 \cdot \frac{x}{2} B(OH)_2\right]_n$$

where B is an alkali earth metal, _n_ is a positive integer and _x_ is an integer in the range 1 - 2.7.

Polynucleate aluminium-chloride solutions of the PALC-type are described in FR,A1, 7512975, according to which the solutions are prepared by alkalising aluminium-chloride solutions with solutions of alkali hydroxide. According to this reference, however, it is not possible to produce clear, stable solutions other than when preparing highly diluted solutions. By "stable solution" is meant here and in the following a solution whose composition and properties will not change when the solution is stored for a long period of time. For example, it is stated in the aforementioned reference that, under special conditions, there can be obtained a solution with up to 0.40 moles Al per litre. This solution, which has a highly limited stability, must be injected directly into the water to be purified. It is clear from the reference, and in particular from the Examples therein, that solutions where the aluminium concentration is higher than about 0.1 mole/l cannot be expected to be effective and stable with the known PALC-solutions described in the reference.

Sulphate-based basic Al-compounds are described in EP,A, 79850039-4, EP,A, 80850033-4 and SE,A, 8101830-1.

These products contain, to a greater or lesser extent, polynucleate metal ions in solutions, and are thus an effective water-purifying agent. The sulphate-based products can also be used for purposes

other than purifying water, since the presence of the polynucleate metal ions enables desired effects to be achieved.

In certain cases, however, it is desirable, and also necessary, to limit the supply of sulphate ions as far as possible in applications within the aforementioned fields of use, and particularly when purifying drinking water. This is of particular importance in systems which are used and purified a repeated number of times, to eliminate the risk of sulphate accumulating in tissues and, from the aspect of concrete corrosion, in the water. For example, this applies to certain water-purifying systems where water is a scarce commodity, necessitating the water to be used for as long as possible between intermediate purifying operations. After purifying such water 10 times with conventional Al-sulphate or compositions with corresponding sulphate contents (FALS), the sulphate content of the water will be so great that the water will attack the water-piping system, to cause troublesome leaks. The problems arising from the working-up of sulphate ions are now also prevalent in the manufacture of paper, where, for environmental reasons, the water-conveying system is, to a great extent, closed. The manufacturing processes are seriously effected when the amount of salts contained in the paper stock are excessively high.

The US Patent Specification No. 4,238,347 describes a method for producing a basic aluminium sulphate poor in sulphate, of the formula

$$Al(OH)_x\ (SO_4)_y\ \ (H_2PO_4)_z\ (H_2O)_w$$

where x is 0.75 - 1.5;
y is 0.7 - 1.07;
z is 0 - 0.2; and
w is 2.0 - 4.2, whereat
x+2y is equal to 3.

The compounds are prepared by reacting aluminium sulphate with ground calcium carbonate optionally in the presence of phosphoric acid; and

filtering the resultant reaction mixture in order to remove the gypsum formed.

It has been found, however, that the carbon dioxide given off during the reaction with calcium carbonate, and the gypsum formed by said reaction, create serious problems from the aspect of process techniques, because the foam formed cannot be broken down, especially with high concentrations of aluminium sulphate. The foam cannot be broken down effectively, even when foam inhibitors are present. In all events, the use of foam inhibitors should be avoided, because it acts as a contaminant in the various fields in which the aluminium sulphate is used. The calcium carbonate also impairs the stability of the product.

Disclosure of the present invention

It has now surprisingly been found possible to eliminate the aforementioned problems by using a sulphate-based sulphate-poor product which can be produced in a simple and efficient fashion and which has the general formula

$$\left[Al(OH)_x\ (SO_4)_y\ \ (H_2O)_z\right]\ n$$

where n is an integer
x is 0.75 - 1.5;
y is 0.7 - 1.07;
x+2y is 3;
z is 1.4 – 4; z is $<$ 4 when the product is in solid form and $>$ 4 when the product is in the form of an aqueous solution.

The invention is characterized in that an aluminium sulphate is reacted with one or more compounds of the group comprising CaO, $Ca(OH)_2$, BaO, $Ba(OH)_2$, SrO and $Sr(OH)_2$ in aqueous solution, to form a compound of the above general formula, whereafter the earth alkali metal sulphate formed is separated and the solution, optionally, evaporated.

The preferred compounds are those in which:

$x$ is 1.6 - 1.8

$y$ is 0.6 - 0.7

$z$ is 2.0 - 2.5

The compound exists in the form of a polynucleate complex in aqueous solution, and should exist in the same form in the solid product.

Preferred method of carrying out the invention

The compound according to the invention can be prepared as follows;

A basic aluminium-sulphate solution is prepared by precipitating sulphate from an aluminium-sulphate solution by adding calcium hydroxide, whereafter the resultant precipitate, in the form of $CaSO_4 \times 2H_2O$, gypsum, is filtered off.

The sulphate ions can be precipitated by means of any acid-soluble Ca-compound, which separate to form OH, and also by means of any corresponding barium and strontium compound. Thus, CaO, and $Ca(OH)_2$, or corresponding barium or strontium compounds, can be used, although CaO and $Ca(OH)_2$ are particularly preferred.

It is only necessary to add small quantities of water to the ingoing reactants during the process in order to produce solutions of high aluminium concentration. Thus, the ingoing lime in the water is slurried to a manageable consistency, by which is meant ratios of 1:1 between CaO; $H_2O$. A minor quantity of ingoing aluminium sulphate is slurried in water in the reaction vessel, while being vigorously agitated to form a slurry, whereafter the lime slurry and solid aluminium sulphate is added to the slurry progressively and batchwise, or continuously and simultaneously. When adding the lime slurry and solid aluminium sulphate, the pH of the solution should be kept as low as possible, pH $< 4$, to eliminate the risk of precipitating aluminium hydroxide, $Al(OH)_3$. The reaction between aluminium sulphate and lime releases the combined-water, in accordance with

the following reaction formuli, which exemplify precipitation of half the sulphate;

$$2\ Al_2\ (SO_4)\ \cdot 14H_2O + 3\ Ca(OH)_2 + xH_2O \longrightarrow$$

$$Al_4\ (SO_4)_3\ (OH)_6 + 3\ Ca\ SO_4\ \cdot 2H_2O + 22H_2O + xH_2O$$

where $xH_2O$ indicates the optional addition of water.

Thus, in the example, for each Ca there is released $\frac{22}{3}$ $H_2O$ present as a solvent in the final product, from which follows that the amount of water used when slurrying the lime shall be as small as possible. The process is also exothermic through neutralisation heat, and can therefore be carried out without supplying heat from external sources. Because, inter alia, of the external conditions, however, it is preferred to supply heat.

In the temperature range 70 - 90$^{\circ}$C the amount of $CaSO_4$-precipitate is less voluminous, with better filtering properties. This explains, among other things, the reason for supplying heat to the process, the temperature preferably being maintained at about 80$^{\circ}$C. At room temperature, the solution has a high viscosity and is therefore preferably filtered at a temperature of 80$^{\circ}$C. The filtering process is suitably a pressure-filter process, since vacuum filtering results in undesirable boiling of the solution, resulting in uncontrolled concentration.

The aforegoing describes a preferred method of manufacture. The product, however, can also be produced by metering dry lime to a slurry comprising the total amount of water and aluminium sulphate. The resultant gypsum precipitate is granular, because gypsum precipitates onto the lime nucleates.

In another method of manufacture, the aforedescribed slurry of aluminium sulphate is produced by mixing an ultimate product solution with solid aluminium sulphate. In this case, the water is added to the lime slurry, which as a result becomes thinner and easier to

handle, although because of the greater volume obtained more energy is required to effect the filtering process.

Combinations of the aforementioned methods can also be applied.

EXAMPLE 1

A basic aluminium sulphate solution was prepared in accordance with the preferred process described above, in which the starting raw material comprised

| | | |
|---|---|---|
| Aluminium sulphate | 50.3% | (9% Al) |
| Calcium Hydroxide | 12.4% | |
| Water | 37.3% | |

Subsequent to reacting these constituents at 78°C there was obtained a final product having the following data:

Al : 6.3%

Basicity: OH/Al = 2.0 (= 66.6%)

containing prior to filtration

| | |
|---|---|
| Basic aluminium solution: | 71.2% |
| Calcium sulphate dihydrate: | 28.8% |

$CaSO_4 \cdot 2H_2O$ was filtered off, there being obtained a pure, basic aluminium sulphate solution having adensity of 1.285 g/cm$^3$.

When stored, the solution proved to be unstable, and the aluminium compound contained therein decomposed to form insoluble aluminium salts. It is possible to stabilise the solution, however, by adding 1.0 - 2.0% sodium heptonate, (2, 3, 4, 5, 6-hexahydroxy heptanoic acid sodium salt).

Other suitable stabilising agents include sodium citrate, sodium acetate, sodium tartrate, sodium carbonate or combinations thereof. Other salts of citrate, acetate, tartrate and carbonate can also be used.

Using a complexforming stabilizer such as citric acid, a citrate, tartaric acid, a tartrate the stabilizer can be added in an amount corresponding to up to 1/6 of the molar amount of aluminium when citric acid is used and up to 1/4 of the molar amount of aluminium when tartaric acid is used. Other stabilizers of the $\alpha$-hydroxy-carbolic acid type are lactic acid, malic acid, and glycolic acid. Using lactic and glycolic acid up to 1/2 of the molar content of aluminium can be used, and using malic acid up to 1/4 of the molar content of aluminium can be used. However, a good stabilization is also obtained using half of these amounts, e.g. 1/12 mole of citric acid per mole of aluminium.

The 6%-solution above can be diluted down to a concentration of 2% calculated as Al; the lower concentration should be avoided because of excessively reduced stability, even when a stabilising agent is added.

As beforementioned, the 6%-solution is unstable, due to the prevailing conditions of equilibrium, which results in the formation of insoluble aluminium compounds when the solution is stored, as mentioned in the aforegoing. The rate at which decomposition takes place during storage is dependent on temperature and will increase with increasing temperature.

Despite this, however, it is possible to evaporate the solution to a stable, solid dry product which is soluble in water and which provides solutions which are able to maintain their properties, compared with the original solution. Although, the stability may be impaired when re-dissolving the solid product, it is still fully sufficient for practical technical use, for example for application to a paper-making machine.

The evaporating temperature should not exceed 70$^{o}$C, and, in addition, the time taken to effect the evaporation process should be as short as possible, through selection of suitable evaporation apparatus,

such as a thin-layer evaporator with good air ventilation. Such an evaporator provides a brittle cake, which falls to pieces to form an X-ray amorphous product.

When evaporating a product according to the Example, there are also obtained different end-products in dry form, according to the Table below.

Table

| Product / Content | | 1 | 2 | 3 | 4 |
|---|---|---|---|---|---|
| Al | % | 16.9 | 15.2 | 16.5 | 17.3 |
| $SO_4$ | % | 40.7 | 40.9 | 44.9 | 47.5 |
| $H_2O$ | % | 24.8 | 30.3 | 22.6 | 18.3 |
| OH/Al | | 1.65 | 1.52 | 1.46 | 1.44 |
| Basicity | % | 55.0 | 50.7 | 48.7 | 48.0 |

1. Solution thin-layer evaporated at 65°C
2. Solution vacuum evaporated at 22°C
3. Solution thin-layer evaporated at 65°C
4. Solution thin-layer evaporated at 85°C

Product 4 has poor solubility due to an excessively high evaporation temperature.

The products 1 - 3 took from 5 to 10 minutes to completely dissolve in water, while product 4 took 1 hour.

The products produced in accordance with the invention exhibited good properties with respect to the neutralisation of the charge in colloidal systems, which promotes good coagulation and rapid flocculation when purifying water, and good retention when manufacturing paper. Since the product is poor in sulphate, it can be used to advantage in paper-making industries employing closed pulp-water systems, to eliminate the undesirable accumulation of sulphate ions. Excessive quantities of sulphate ions inhibit desired surface chemical reactions.

CLAIMS

1. A method for producing a basic aluminium sulphate which in aqueous solution produces positively charged polynucleate complexes having charge-neutralizing properties in systems containing suspended or colloidal negatively charged particles, characterized by reacting an aluminium sulphate with one or more compounds taken from the group Cao, $Ca(OH)_2$, BaO, $Ba(OH)_2$, $Sr(OH)_2$ and SrO in aqueous solution, to form a compound of the general formula

$$A\ell(OH)_x\ (SO_4)_y\ (H_2O)_z \quad n$$

where n is an integer
x is 0.75 - 1.5;
y is 0.7 - 1.07;
x+2y is 3; and
z is 1.5 - 4; whereat when the product is in solid form z is $\leq 4$, while when the product is in the form y an aqueous solution z is $> 4$;
and by separating the sulphate formed and optionally evaporating the solution.

2. A method according to Claim 1, characterized in that either CaO or $Ca(OH)_2$ is used, and that the reaction is carried out at a temperature of 70-90$^\circ$C.

3. A method according to Claims 1-2, characterized by adding a lime-water-slurry and solid aluminium sulphate to part of the aluminium sulphate in the form of an aqueous slurry.

4. A method according to Claims 1-3, characterized in that the pH of the reaction mixture is held beneath 4.

5. A method according to any one of Claims 1-4, characterized by evaporating the resultant solution at a temperature not exceeding 70$^\circ$C, to solid form.

6. A method according to any one of claims 1-5, characterized in that the aluminium sulphate is reacted with one or more of the compounds selected from the group consisting of citric acid, tartaric acid, lactic acid, malic acid, glycolic acid, and their salts, acetates as sodium acetate, carbonates as sodium carbonate, and heptonates as sodium heptonate.

0069719

European Patent Office

# EUROPEAN SEARCH REPORT

Application number

EP 82 85 0149

## DOCUMENTS CONSIDERED TO BE RELEVANT

| Category | Citation of document with indication, where appropriate, of relevant passages | Relevant to claim | CLASSIFICATION OF THE APPLICATION (Int Cl. 3) |
|---|---|---|---|
| X | CHEMICAL ABSTRACTS, vol. 81, no. 10, 9th September 1974, pages 301,302, no. 54134n, Columbus, Ohio, USA & JP - A - 73 70696 (TAKI FERTILIZER MFG. CO., LTD.) 25-09-1973 * Lines 7-11 of the abstract * | 1-4 | C 01 F 7/74<br>C 02 F 1/52 |
| A | DE-A-2 617 282 (DEGREMONT S.A.) | | |
| A | CHEMICAL ABSTRACTS, vol. 89, no. 10, 4th September 1978, page 274, no. 79778d, Columbus, Ohio, USA & JP - A - 77 99994 (TOYO SODA MFG. CO., LTD.) 22-08-1977 * Abstract * | 1,6 | |
| | | | TECHNICAL FIELDS SEARCHED (Int. Cl. 3) |
| | | | C 01 F 7/74<br>C 02 F 1/52 |

The present search report has been drawn up for all claims

| Place of search | Date of completion of the search | Examiner |
|---|---|---|
| THE HAGUE | 06-10-1982 | LIBBERECHT-VERBEECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document